Europäisches Patentamt

European Patent Office

Office européen des brevets

(11) Veröffentlichungsnummer: **0 240 810**
**A2**

# (12) EUROPÄISCHE PATENTANMELDUNG

(21) Anmeldenummer: 87104150.5

(22) Anmeldetag: 20.03.87

(51) Int. Cl.³: **F 16 F 1/32**

(30) Priorität: 05.04.86 DE 3611498

(43) Veröffentlichungstag der Anmeldung:
14.10.87 Patentblatt 87/42

(84) Benannte Vertragsstaaten:
CH DE FR IT LI NL SE

(71) Anmelder: BBC Aktiengesellschaft Brown, Boveri & Cie.
Haselstrasse
CH-5401 Baden(CH)

(72) Erfinder: Orth, Egon, Ing.-grad.
Anwanneweg 99
D-6450 Hanau 9(DE)

(72) Erfinder: Plettner, Horst
Bogenstrasse 44
D-6450 Hanau 11(DE)

(74) Vertreter: Rupprecht, Klaus, Dipl.-Ing. et al,
c/o BROWN, BOVERI & CIE AG Postfach 351
Zentralbereich Patente
D-6800 Mannheim 1(DE)

(54) Tellerfederpaket.

(57) Ein Tellerfederpaket besitzt mindestens zwei in Reihe geschaltete Tellerfederelemente (10, 11) die sich an ihrem Innen- bzw. Außenumfang gegenüberstehen und dort gegeneinander geführt sind. An diesen Bereichen jedes Elementes (10, 11) ist jeweils eine Rille (17, 19, 21) vorgesehen, die sich in zusammengeschaltetem Zustand jeweils zu einem Hohlraum ergänzen. In diesem Hohlraum befinden sich dem Kreisradius der Rillen angepaßte gebogene Drahtstücke (20, 22), auf denen die einzelnen Elemente aufliegen; die Kraftübertragung erfolgt dann über die Drahtstücke (20, 22). Dadurch werden eine kleiner Flächenpressung und bessere Gleitreibungsverhältinisse erzielt gegenüber der Ausführung, wenn sich zwei Federteller bzw. Federelemente direkt berühren.

Fig.1

EP 0 240 810 A2

BROWN, BOVERI & CIE Aktiengesellschaft
Mannheim                                      03. Dezember 1986
Mp.-Nr. 545/86                                ZPT/P4-Ft/Sd
P 36 11 498.7

### Tellerfederpaket

Die Erfindung betrifft ein Tellerfederpaket gemäß dem Oberbegriff des Anspruches 1.

Tellerfedern zur Erzeugung bestimmter Federcharakteristika sind an sich bekannt. So sind Tellerfederpaketanordnungen bekannt, bei denen jeweils ein Federteller mit seiner konvexen bzw. konkaven Seite jeweils dem nächsten Federteller gegenüberliegt. Zur Führung der Federteller gegeneinander ist bekanntgeworden, an den aufeinander zuweisenden Flächen und zwar einerseits an den sich berührenden Außenkanten und andererseits an den sich berührenden Innenkanten Rillen vorzusehen. Sich gegenüberliegende Rillen bilden dabei einen Kanal, in dem mehrere Kugeln geführt sind, die dabei eine formschlüssige Führung der beiden sich gegenüberliegenden bzw. sich berührenden Federteller bewirken. Der Querschnitt der Rillen ist halbkreisförmig den Kugeln angepaßt.

Diese Kugeln haben den Vorteil, daß sie gewisse radiale Versatztoleranzen der einzelnen Federteller gegeneinander dadurch zulassen, daß sie sich längs der Rillen bewegen und so ihre Abstände zueinander verändern können. Der Nachteil bei Verwendung dieser Kugeln besteht darin, daß die Montage der Kugeln und damit die Montage eines Tellerfederpaketes kompliziert wird.

Eine Lösung, wie zwei oder mehr gleichsinnig einander zugeordnete, also parallel geschaltete Federteller radial gegeneinander geführt werden können, ist nicht bekanntgeworden.

Aufgabe der Erfindung ist es, ein Tellerfederpaket und dort die einzelnen Federteller so auszubilden, daß die Montage der Führungen gegeneinander erheblich erleichtert ist.

Diese Aufgabe wird erfindungsgemäß bei einem Tellerfederpaket, bei dem jeweils ein Federteller gegensinnig gegen den anderen anliegt, so daß je zwei Federteller mit ihren offenen Tellerflächen gegeneinander anliegen und damit also in Reihe geschaltet sind, gelöst durch die kennzeichnenden Merkmale des Anspruches 1.

Durch die Verwendung nicht von Kugeln, sondern von Walz- bzw. Runddraht wird die Montage der einzelnen Führungselemente erheblich erleichtert. Wie oben angedeutet, erlauben die Kugeln durch Veränderung des Abstandes der Kugeln zueinander einen gewissen Toleranz- und Versatzausgleich. Würde man rein halbkreisförmige Rillen bei Drahtstücken verwenden, so wäre ein Toleranzausgleich nicht möglich, da die Drahteilstücke praktisch kaum elastisch verformbar sind. Damit aber ein Toleranzenausgleich möglich ist, sind die Rillen im Querschnitt nicht exakt halbkreisförmig dem Draht angepaßt, sondern langgestreckt und besitzen zwischen ihren beiden kreisbogenförmigen Endbereichen eine flache ebene Bereichsstrecke. Dadurch können sich sich gegenüberliegende bw. sich berührende Federteller gegeneinander verschieben, ohne daß sie durch die Drahtteilstücke behindert werden.

Wenn zwei oder mehrere Federteller zur Bildung eines Tellerfederelementes gleichsinnig aneinanderliegen, d.h. parallel geschaltet sind, dann wird man zur Führung dieser Federteller an den sich berührenden Flächen etwa in ihrem mittleren Radius Rillen vorsehen, in denen die Walzdrahtteilstücke eingelegt sind. Auch hier sind die Rillen verbreitert, damit bei Aufbringen einer Belastung und einer dadurch bewirkten Stülpung der beiden parallel belasteten Federteller der Führungsdraht bzw. Walzdraht bzw. die Drahtteilstücke in den Rillen eine seitliche Auswanderungsmöglichkeit haben, so daß Verschiebungen der beiden das Tellerfederelement bildenden Federteller gegeneinander entsprechend ihrer elastischen Verformung ermöglicht sind.

Die Erfindung hat darüber hinaus noch einen besonders wichtigen Vorteil:
Bei der Verwendung der Kugeln zur Führung der sich gegenüberliegenden Federteller bzw. Tellerfederelemente läßt es sich nicht vermeiden, daß sich die Federteller bzw. Tellerfederelemente gegenseitig berühren. Dadurch entstehen undefinierte Verhältnisse, die einen ungünstigen Einfluß auf die Zusammendrückbarkeit und damit die Hysterese des gesamten Tellerfederpaketes haben.

Erfindungsgemäß berühren sich die Federteller bzw. Tellerfederelemente an ihren sich gegenüberliegenden Innen- und Außenbereichen nicht, sondern stützen sich über die dazwischen befindlichen Drahtteilstücke ab. Dadurch wird eine ganz definierte Gleitreibung allein zwischen den Drahtteilstücken und den daran anliegenden Federteller bzw. Tellerfederelementen erzielt, wobei eine kleinere Flächenpressung erzielt wird und die Gleitreibungsverhältnisse erheblich verbessert werden.

Anhand der Zeichnung, in der zwei Ausführungsbeispiele der Erfindung dargestellt sind, sollen die Erfindung und weitere vorteilhafte Ausgestaltungen und Verbesserungen näher erläutert und beschrieben werden.

Es zeigt:

Figur 1:    eine Schnittansicht durch ein Tellerfederpaket mit zwei aus parallel einander zugeordneten Federtellern gebildeten Tellerfederelementen,

Figur 2:    ein Federpaket mit allen Federtellern jeweils in Reihe und

Figur 3 und 4: zwei unterschiedliche Rillenformen.

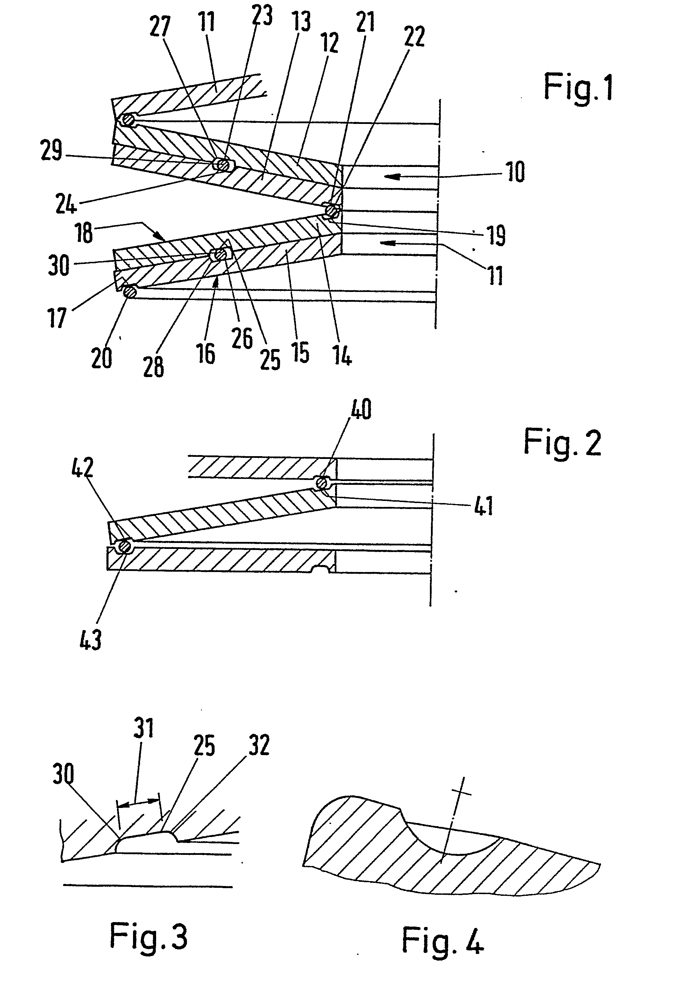

Bei dem Tellerfederpaket gemäß Figur 1 sind zwei Tellerfederelemente 10 und 11 in Reihe angeordnet, die jeweils aus zwei parallel zueinander geschalteten Federtellern 12 und 13 bzw. 14 und 15 bestehen. An den Federteller 12 schließt sich dann ein dem Tellerfederelement 11 entsprechendes weiteres Element an.

Der Federteller 15 weist im Bereich seiner konkaven Fläche 16 am Außenrand eine Rille 17 auf, wogegen der Federteller 14 an seiner konvexen Außenfläche 18 im Bereich des Innenrandes eine Rille 19 (s. Figur 1) besitzt. In der Rille 17, die umlaufend angeordnet ist,
ist ein Führungsdraht 20 (auch Drahtteilstück 20 genannt) eingelegt gezeichnet. Am Innenradius des Federtellers 13 im unmittelbar benachbarten Bereich dazu befindet sich eine weitere Rille 21, die mit der umlaufenden Rille 19 einen Hohlraum bzw. Kanal bildet, in den
ein Führungsdraht 22 eingelegt ist. Die Führungsdrähte
20 bzw. 22 dienen zur Verhinderung von größeren seitlichen Versetzungen der Tellerfederelemente 10 bzw. 11 am
Außenumfang und am Innenumfang gegeneinander, erlauben
jedoch einen Ausgleich gewisser radialer Toleranzen und
geringer seitlicher Versetzungen und führen die einzelnen Federteller bzw. Tellerfederelemente gegeneinander.

So wie die beiden Tellerfederelemente 10 und 11 gegeneinander gegen radiale Versetzung gesichert sein müssen,
müssen auch die Federteller 12 und 13 bzw. 14 und 15 gesichert sein. Zu diesem Zweck besitzen sie im Bereich
des mittleren Durchmessers sich gegenüberliegend ebenfalls Rillen 23 und 24 bzw. 25 und 26, die im Querschnitt einen Hohlraum 27 bzw. 28 bilden, in den ein
Führungsdraht 29 bzw. 30 eingelegt ist.

Alle Führungsdrähte 20, 21; 29, 30 sind keine zu einem
geschlossenen Kreis gebogene Drähte, sondern sind aus
mehreren Drahtteilstücken gebildet, vorzugsweise aus
zwei, die einen Toleranzausgleich gestatten. Der Querschnitt der Führungsdrähte ist kreisförmig.

Mp.-Nr. 545/86  6  03. Dez. 1986
P 36 11 498.7  0240810

Aus der Figur 3 geht der Querschnitt der Rille 25 näher hervor. Man erkennt einen kreisbogenförmigen Bereich 30a und einen ebenen Bereich 31, an den sich ein kreisbogenförmiger Bereich 32 anschließt. Der Radius der beiden Bereiche 30a und 32 entspricht dem Radius des darin eingelegten Drahtes 29 und der ebene Bereich 31 läßt radiale Bewegungen des Drahtes 29 in gewissem Umfang zu.

Eine weitere Rillenform ist aus Figur 4 ersichtlich. Danach ist der Radius der Rille doppelt so groß wie ihre Tiefe. Diese Rille ist vorzugsweise als Rille 17 bzw. 19 oder 21 vorgesehen.

Ebenso wie die Rillen 21 und 19 bzw. 17 sind auch Rillen 40 und 41 bzw. 42 und 43 vorgesehen, die dann Anwendung finden, wenn mehrere Federteller hintereinander geschaltet sind und keine zwei jeweils parallel einander zugeordnet sind.

Die Figur 2 zeigt, daß die Federteller sich an ihren Innen- und Außenbereichen nicht berühren, sondern daß aufgrund der Abmessungen der Drahtstücke dazwischen ein Abstand A vorhanden ist. Dieser Abstand A bewirkt, daß die Kraftübertragung zwischen den einzelnen Federtellern bzw. Tellerfederelementen nicht über die Federteller selbst, sondern über die dazwischen befindlichen Drahtstücke erfolgt. Hierdurch wird eine kleinere Flächenpressung erreicht und die Gleitreibungsverhältnisse zwischen den einzelnen Federtellern werden verbessert.

Die erfindungsgemäße Maßnahme, die Federteller an ihren Innen- und Außenflächen sich nicht berühren zu lassen, was durch geeignete Bemessung des Durchmessers der Drahtstücke bewirkt wird, ist natürlich auch möglich bei der Anordnung gemäß Figur 1, bei der die sich am Innen- und Außenradius gegenüberliegenden Tellerfederelemente 10 und 11 ebenfalls in diesen Bereichen nicht berühren sollen, sondern bei denen die Kraftübertragung ausschließlich über die dazwischen befindlichen Drahtstücke erfolgen muß.

Bei den Führungsdrahtstücken 29 ist dies natürlich nicht der Fall. Die Führungsdrahtstücke sind so bemessen, daß die Parallelschaltung der beiden Federteller 12 und 13 bzw. 14 und 15 der Figur 1 nicht gestört wird.

Durch die über die Drahtteilstücke übertragenen Federkräfte wird eine Verringerung der örtlichen Spannungen an der Oberfläche der Federteller erzielt.

Die Hysterese des Federpaketes wird durch den Abroll- bzw. Gleitvorgang an den Drahtteilstücken beim Spannen bzw. Entspannen der Federelemente reduziert.

Ansprüche

1. Tellerfederpaket mit mindestens zwei in Reihe geschalteten Tellerfederlementen, die an ihrem Innen- bzw. Außenumfang zur Kraftübertragung gegeneinander geführt sind, dadurch gekennzeichnet, daß an den sich gegenüberliegenden Bereichen am Innen- bzw. Außenradius jedes Tellerfederelementes (10, 11; 12, 13; 14, 15) jeweils eine sich im zusammengeschalteten Zustand zu einem Hohlraum ergänzende Rille (17, 19, 21) vorgesehen ist, die im Querschnitt einen langgestreckten, ovalen, von der Kreisform abweichenden Querschnitt aufweist, in welchen Hohlräumen dem Kreisradius der Rillen angepaßte, gebogene, als Führungsdrähte dienende Drahtteilstücke (20, 22) eingesetzt sind.

2. Tellerfederpaket nach Anspruch 1, dadurch gekennzeichnet, daß in jedem Hohlraum zwei bis vier Drahtteilstücke untergebracht sind.

3. Tellerfederpaket nach einem der Ansprüche 1 oder 2, dadurch gekennzeichnet, daß der Durchmesser des Querschnittes der Drahtteilstücke (20, 22) so bemessen ist, daß an den sich gegenüberliegenden Bereichen am Innen- bzw. Außenradius jedes Elementes (10, 11; 12, 13; 14, 15) zwischen den Elementen ein Abstand (A) vorgesehen ist, so daß die Kraftübertragung am Innen- bzw. Außenradius des Tellerfederpaketes lediglich über die Drahtteilstück (20, 22) erfolgt.

4. Tellerfederpaket nach einem der vorigen Ansprüche, bei dem jedes in Reihe geschaltete Tellerfederelement aus mindestens zwei parallel geschalteten Federtellern gebildet ist, dadurch gekennzeichnet, daß jeder Federteller (12, 13; 14, 15), der mit einem weiteren Federteller zu dem Parallel-Tellerfederelement zusammengeschaltet ist, an den sich gegenüberliegenden und sich berührenden Flächen im Bereich des mittleren Radius im Querschnitt langgestreckte Rillen (23, 24; 25, 26) aufweist, die sich zu einem Hohlraum (27, 28) ergänzen, in denen sich den Rillen angepaßte, gebogene Drahtteilstücke (29, 30) befinden.

0240810

Fig.1

Fig. 2

Fig.3

Fig. 4